## Europäisches Patentamt

(19) **European Patent Office**

**Office européen des brevets**

(11) Publication number: **0 039 249**
**B1**

(12) **EUROPEAN PATENT SPECIFICATION**

(45) Date of publication of patent specification: **21.11.85**

(51) Int. Cl.⁴: **G 01 G 7/04**

(21) Application number: **81301905.6**

(22) Date of filing: **30.04.81**

(54) An electronic balance.

(30) Priority: **30.04.80 JP 58388/80**
**15.07.80 JP 97319/80**

(43) Date of publication of application:
**04.11.81 Bulletin 81/44**

(45) Publication of the grant of the patent:
**21.11.85 Bulletin 85/47**

(84) Designated Contracting States:
**CH DE FR GB LI**

(56) References cited:
**DE-A-2 114 141**
**DE-B-2 722 093**
**FR-A-2 394 787**
**GB-A-1 346 759**
**GB-A-2 032 112**
**US-A-3 237 449**
**US-A-3 786 884**
**US-A-3 816 156**

(73) Proprietor: **SHIMADZU CORPORATION**
**378, Ichinofunairi-cho Kawaramachi-dori Nijo Sagaru**
**Nakagyo-ku Kyoto 604 (JP)**

(72) Inventor: **Komoto, Akira**
**3-10, Fujio Okumachi**
**Otsushi Shigaken (JP)**
Inventor: **Tsuji, Tomohiro**
**75-43 Minamihoriike**
**Oguracho Ujishi Kyoto (JP)**

(74) Representative: **Smith, Philip Antony et al**
**REDDIE & GROSE 16 Theobalds Road**
**London WC1X 8PL (GB)**

Courier Press, Leamington Spa, England.

## Description

The present invention relates to an electronic balance comprising a fixed portion including a permanent magnet and a magnetic circuit, a movable portion displaceable by an applied load, a coil for generating a magnetic force acting on the movable portion in opposition to the load, and means for controlling the supply of current to the coil to balance the load.

In general, known electronic balances are designed to weigh an object placed on the pan or tray by balancing the applied load due to the object against a force induced in the coil placed in a magnetic field and measuring the current value obtained therethrough. In this type of balances the Joule heat liberated in the coil varies in a relatively large range in accordance with the load, that is, the weight of an object placed on the balance. This causes temperature variations inside the balance, whereby its mechanical and electrical components are subjected to detrimental temperature changes. This is likely to cause an error in measuring the weight, and spoil the accuracy and reliability which are considered as essential to the balance.

To overcome this problem of temperature variations, there have been many proposals among which is the employment of an extra heat generator near the coil. The heat generated by it is controlled to compensate for changes in the heat liberated by the coil, thus maintaining the thermal equilibrium. However, it is not advantageous to provide an additional heat generator because of the resulting structural complexity and high cost.

DE—B—27 22 093 describes an electronic balance of the known type which includes means for supplying to the coil alternatively a first steady current in the positive direction for a first time and a second steady current in the negative direction for a second time, the sum of the first and second times defining a repetition period; a detector for detecting displacement of the movable portion; a feedback controller for controlling the current supply means in accordance with the output of the detector so as to balance the applied load with the force induced in the coil; and means for determining the weight of the load by calculating the mean value of the current with respect to time.

The present invention differs from this prior proposal in that the current supply means are so arranged that said first and second times are held constant and equal and the weight is determined by calculating the difference between said first and second steady currents. This results, as will be shown in a substantially constant heat generation in the coil regardless of the weight of the load.

Other objects and advantages of the present invention will become apparent from the detailed description given hereinafter; it should be understood, however, that the detailed description and specific embodiments are given by way of illustration only.

Brief explanation of the drawings

Fig. 1 shows a digrammatic construction of an embodiment of the present invention, and

Fig. 2 shows three typical waveforms of the weight-balancing current to flow in the coil 4 shown in Fig. 1.

Detailed description of the invention

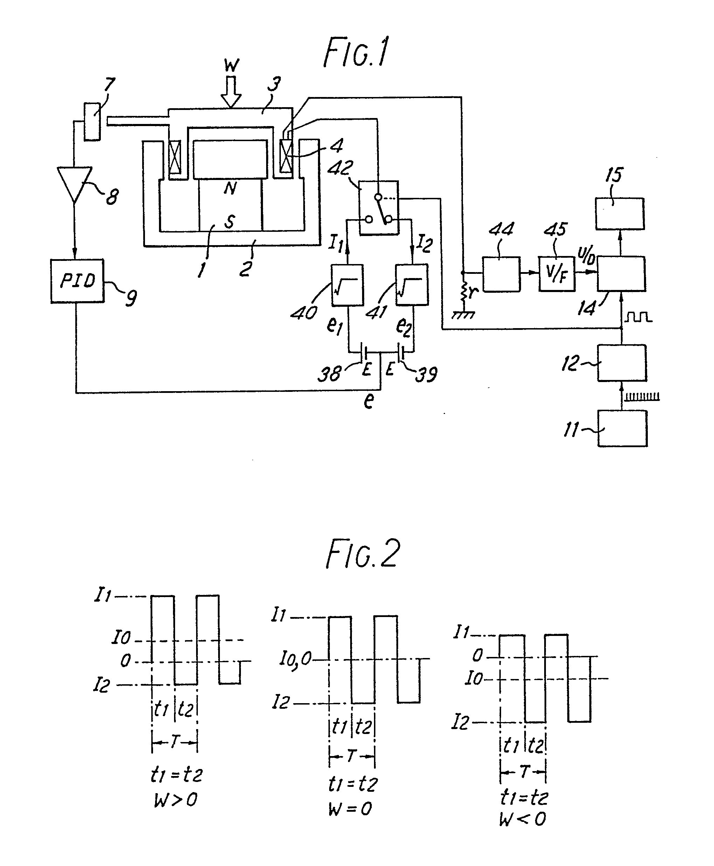

Referring to Figure 1 the balance includes a fixed portion and a movable portion constructed by the Roberval mechanism. A permanent magnet 1 and magnetic circuit 2 are provided in a known manner in the fixed portion. The balance is mounted on a base. The movable portion includes a tray 3 adapted to receive an object to be weighed. The tray 3 has a pair of legs extending into gaps produced in the magnetic circuit 2. The legs are provided with a winding of conductor, and as a whole they constitute a coil 4. In the drawing the movable portion is schematically shown with the omission of detailed illustrations. When any load or force W is applied to the tray 3, the movable portion is displaced downward or upward depending on the direction of the force W, which is either downward or upward. Hereinafter, a downward force shall be defined to be positive, and vice versa. This displacement of the movable portion is to be offset by an electro magnetic force which the coil 4 produces with a balancing current $I_0$ supplied thereto. The balancing current $I_0$ shall be defined to be positive when it flows in the direction defying a force applied downward (W>0) to the tray 3 and therefore the current $I_0$ defying a force applied upward (W>0) to the tray 3 is defined to be negative.

The movable portion of the balance is displaced either above or below its stage of equilibrium when a load is applied thereto. Thid displacement is detected by means of a sensor 7, which can be of a known type employing any of a capacitor, a photo-electric element, a differential transformer, or the like.

In any case the sensor 7 outputs a displacement signal in proportion to the displacement of the tray 3. The displacement signal is amplified by an amplifier 8, and inputted to a known PID controller 9, which outputs a control signel 3. This PID controller output e is added to the outputs of two constant-voltage sources 38 and 39 whose output voltage values are E and —E, respectively. The voltage sums thus produced $e_1=E+e$ and $e_2=-E+e$ are inputted to root amplifiers 40 and 41, respectively. The root amplifiers 40 and 41 output their respective output currents $I_1$ and $I_2$ expressed by

$$I_1=\sqrt{e_1}=\sqrt{E+e} \qquad (1)$$

$$I_2=\sqrt{-e_2}=\sqrt{E-e} \qquad (2)$$

These currents $I_1$ and $I_2$ are alternately supplied to the coil 4 through a change-over switch 42, which is driven by the pulse signal outputted from a frequency divider 12. This frequency divider 12 generates a train of pulse signals with a duty ratio of 1:1 in accordance with the clock signal generated by a clock oscillator 11. With the current $I_1$ and $I_2$ supplied, the coil 4 exerts an electromagnetic force in proportion to the averaged current $I_0 = (I_1 - I_2(/2.$

Fig. 2 shows three modes of the current which flows in the coil 4. In case the load W is positive, the absolute value of $I_1$ is larger than that of $I_2$, and therefore the time-averaged current $I_0$ becomes positive, as is shown in the current mode drawing shown on the left in the figure. The current mode shown at the center of the figure is W=0. In this case $I_0$ also is zero. The current mode for W<0 is shown on the right in the figure. In this case $I_1$ is smaller than $I_2$, so that the average current $I_0$ is negative.

In any case of these three current modes, the current flowing in the coil 4 is converted into a voltage value through resistance r. The voltage value is inputted to an absolute-value converter 44. The output from the absolute-value converter 44 is converted into a frequency signal by a voltage to frequency converter 45. The frequency signal is inputted to an up-down counter 14, which counts the input at an upper side or at a lower side depending on whether the output pulse from the frequency divider 12 is at a high level or at a low level. The output from the counter 14 is displayed on an indicator 15 to show a value of W which is proportional to the time-averaged current $I_0$.

In such a mechanism of electromagnetic force generation, the heat P liberated from the coil 4 is given by

$$P=(I_1^2+I_2^2)R \qquad (3)$$

where R is the resistance of the coil 4. In consideration of the equations (1) and (2) the above equation (3) can be rewritten as

$$P=(E+e+E-e)R \qquad (4)$$

Therefore, the heat P is finally given by

$$P=(E+e+E-e)R$$
$$=2ER \qquad (5)$$

This means that the heat P liberated from the coil 4 is always constant.

The embodiment illustrated in Figure 1 can be modified by simplifying the structure by the use of an ordinary current-voltage converter replacing the root amplifiers 40 and 41.

In this case,

$$I_1=(E+e)$$

$$I_2=-(-E+e)$$

Therefore,

$$I_1+I_2=2E\equiv C$$

This means that the sum of $I_1$ and $I_2$ is constant. The heat P liberated is expressed with the constant C above

$$P=2R(I_1^2-CI_1+(1/2)C^2) \qquad (6)$$

when the load is zero, $I_1$ will be equal to (1/2)C.
Therefore, $P=(1/2)C^2R$
When the load is at maximum ($I_2=0$), $I_1=C$; then

$$P=C^2R$$

From this, it follows that the liberated heat varies in the range of 1/2 to 1 in accordance with the load changing from 0 to the maximum. Under the conventional practice the liberated heat changes in the range of 0 to 1, and as compared with it, this modified embodiment is nevertheless advantageous.

## Claims

1. An electronic balance comprising a fixed portion including a permanent magnet (1) and a magnetic circuit (2), a movable portion (3) displaceable by an applied load, a coil (4) for generating a magnetic force acting on the movable portion (3) in opposition to the load, means (40, 41, 42) for supplying to the coil alternately a first steady current $I_1$ in the positive direction for a first time $t_1$ and a second steady current $I_2$ in the negative direction for a second time $t_2$, the sum of $t_1$ and $t_2$ defining a repetition period T, a detector (7) for detecting displacement of the movable portion (3), a feedback controller (8, 9) for controlling the current supply means (40, 41, 42) in accordance with the output of the detector (7) so as to balance the applied load with the force induced in the coil (4), and means for determining the weight of the load by calculating the mean value of the current with respect to time characterized in that the current supply means are so arranged that said first and second times $t_1$ and $t_2$ are held constant and equal and the weight is determined by calculating the difference between said first and second steady currents $I_1$ and $I_2$.

2. An electronic balance as defined in Claim 1, wherein the repetition period is within the range of 0.1 sec to 0.1 msec.

3. An electronic balance as defined in Claim 1, further comprising a frequency divider (12) for dividing a single clock signal produced by a clock oscillator (11) into said repetition period T, an up-down counter (14) adapted to count upwards when the current through the coil (4) flows in the positive direction and count downwards when the current through the coil (4) flows in the negative direction, and a circuit for leading said clock signal to the input of said up-down counter (14).

## Patentansprüche

1. Elektronische Waage mit einem feststehenden Teil, der einen Permanentmagneten (1) und einen magnetischen Kreis (2) umfaßt, einem beweglichen Teil (3), dessen Lage durch eine aufgebrachte Last veränderbar ist, einer Spule (4) zur Erzeugung einer magnetischen Kraft, die an dem beweglichen Teil (3) entgegensetzt sur Last angreift, Mitteln (40, 41, 42), um der Spule alternierend einen ersten gleichbleibenden Strom $I_1$ in der positiven Richtung während einer ersten Zeit $t_1$ und einen zweiten gleichbleibenden Strom $I_2$ in der negativen Richtung während einer zweiten Zeit $t_2$ zuzuführen, wobei die Summe von $t_1$ und $t_2$ eine wiederkehrende Periode T definiert, einem Anzeiger (7) zur Anzeige von Lageänderungen des beweglichen Teils (3), einen rückgekoppelten Regler (8, 9) zur Regelung der Mittel (40, 41, 42) zur Stromzuführung entsprechend dem Ausgang des Anzeigers (7), um die aufgebrachte Last mit der in der Spule (4) induzierten Kraft zu kompensieren, und mit Mitteln, die das Gewicht der Last durch Berechnung des zeitlichen Mittelwertes des Stroms ermitteln, dadurch gekennzeichnet, daß die Mittel zur Stromzuführung so ausgebildet sind, daß die genannten ersten und zweiten Zeiten $t_1$ und $t_2$ konstant und gleich bleiben, und das Gewicht durch Berechnung der Differenz zwischen den genannten Strömen $I_1$ und $I_2$ ermittelt wird.

2. Elektronische Waage gemäß Anspruch 1, dadurch gekennzeichnet, daß die wiederkehrende Periode innerhalb des Bereiches von 0,1 sec und 0,1 msec liegt.

3. Elektronische Waage gemäß Anspruch 1, gekennzeichnet durch einen Frequenzteiler (12) zum Teilen eines durch einen Taktgeber (11) erzeugten Zeitsignals in die genannte wiederkehrende Periode T, einen Vor- und Rückwärtszähler (14), der vorwärts zählt, wenn der Strom durch die Spule (4) in der positiven Richtung fließt und rückwärts zählt, wenn der Strom durch Spule (4) in der negativen Richtung fließt, und einen Schaltkreis zum Zuführen des genannten Zeitsignals zum Eingang des genannten Vor- und Rückwärtszählers (14).

**Revendications**

1. Balance électronique comportant une partie fixe comprenant un aimant permanent (1) et un circuit magnétique (2), une partie mobile (3) pouvant être déplacée par une charge qui lui est appliquée, un bobinage (4) pour engendrer une force magnétique agissant sur la partie mobile (3) en opposition à la charge, des moyens (40, 41, 42) pour alimenter le bobinage alternativement avec un premier courant constant $I_1$ dans le sons positif pendant un premier temps $t_1$ et avec un second courant constant $I_2$ dans le sens négatif pendant un second temps $t_2$, la somme de $t_1$ et $t_2$ définissant une période T de répétition, un détecteur (7) pour détecter un déplacement de la partie mobile (3), un dispositif (8, 9) régulateur à réaction pour commander les moyens (40, 41, 42) d'alimentation en courant en fonction de la sortie du détecteur (7) de façon à équilibrer la charge appliqué avec la force induite dans le bobinage (4), et des moyens pour déterminer le poids de la charge en calculant la moyenne du courant par rapport au temps, caractérisée en ce que les moyens d'alimentation en courant sont agencés de telle sorte que lesdits premier et second temps $t_1$ $t_2$ sont maintenus constants et égaux et le poids est déterminé en calculant la différence entre lesdits premier et second courants constants $I_1$ et $I_2$.

2. Balance électronique telle que définie suivant la revendication 1, dans laquelle la période de répétition est comprise dans la plage de 0,1 sec. à 0,1 msec.

3. Balance électronique telle que définie suivant la revendication 1, caractérisé en ce qu'elle comprend en outre un diviseur de fréquence (12) pour diviser un signal unique d'horloge produit par un oscillateur-horloge (11) afin de fournir ladite période de répétition T, un compteur montant/descendant (14) adapté pour compter vers le haut lorsque le courant circulant dans le bobinage (4) circule dans le sens positif et pour compter vers le bas lorsque le courant circulant dans le bobinage (4) s'écoule dans le sens négatif, et un circuit pour conduire ledit signal d'horloge à l'entrée dudit compteur montant/descendant (14).

## FIG.1

## FIG.2

$t_1 = t_2$
$W > 0$

$t_1 = t_2$
$W = 0$

$t_1 = t_2$
$W < 0$